# EUROPEAN PATENT SPECIFICATION

(11) **EP 3 663 347 B1**
(45) Date of publication and mention of the grant of the patent: **19.04.2023**
(21) Application number: 18840452.9
(22) Date of filing: 05.07.2018
(51) Int. Cl.: C08L 9/00, C08K 3/04, C08L 61/18, F16F 1/36, C08L 7/00

(54) **RUBBER COMPOSITION FOR ANTI-VIBRATION RUBBERS, AND ANTI-VIBRATION RUBBER FOR VEHICLES**
KAUTSCHUKZUSAMMENSETZUNG FÜR VIBRATIONSSCHUTZGUMMI UND VIBRATIONSSCHUTZGUMMI FÜR FAHRZEUG
COMPOSITION DE CAOUTCHOUC POUR CAOUTCHOUCS ANTIVIBRATION ET CAOUTCHOUC ANTIVIBRATION POUR VÉHICULES

(30) Priority: 02.08.2017 JP 2017150123
(43) Date of publication of application: 10.06.2020
(73) Proprietor: Prospira Corporation, Kanagawa prefecture 212-0013 (JP)
(72) Inventor: UCHIDE, Chihiro, Tokyo 104-8340 (JP)
(74) Representative: Marks & Clerk LLP
(86) International application number: PCT/JP2018/025599
(87) International publication number: WO 2019/026537

(56) References cited:
- EP-A1- 2 918 651
- EP-A1- 2 993 059
- EP-A1- 2 993 060
- JP-A- H0 525 359
- JP-A- H01 203 456
- JP-A- H03 177 441
- JP-A- H09 273 592
- JP-A- 2006 052 328
- JP-A- 2007 126 560
- JP-A- 2009 138 053
- JP-A- 2010 255 666
- JP-A- 2010 260 933
- JP-A- 2013 032 452
- JP-A- 2016 138 179
- JP-A- 2016 204 416
- JP-A- 2017 119 873
- US-A1- 2014 339 037

## Description

### TECHNICAL FIELD

The present invention relates to a rubber composition for anti-vibration rubbers, and an anti-vibration rubber for vehicles.

### BACKGROUND ART

An anti-vibration rubber is provided at a site generating vibrations and noises in a vehicle of various types such as automobile vehicle in order to improve riding comfort thereof. In order to reduce propagation of vibrations and noises into the interior of a vehicle, an anti-vibration rubber is employed, for example, for structural members such as a torsional damper, an engine mount, a muffler hanger and the like of an engine as a primary source of vibrations and noises in an automobile vehicle so that the anti-vibration rubber adsorbs vibrations generated when the engine is driven and thus well prevents vibrations and noises from being propagated into the interior of the automobile vehicle and the noise from being diffused into the surrounding environment.

Such an anti-vibration rubber as described above is required to have, as the basic characteristics thereof, high strength for supporting a heavy member such as an engine and good damping properties for satisfactorily absorbing and suppressing vibrations of the heavy member. A variety of techniques has been developed for this purpose.

Specifically, increasing hysteresis loss (tanδ) of an anti-vibration rubber has been demanded in terms of improving vibration damping performance of the anti-vibration rubber. As far as resonant vibrations ("shakes") generated at low frequencies are concerned, the larger hysteresis loss (hysteresis loss will occasionally be referred to simply as "loss" hereinafter) results in the lower transmissibility of vibrations.

For example, PTL 1 discloses, as a technique for realizing high loss properties of an anti-vibration rubber, a technique of using a specific high loss polymer as a rubber component so as to improve the hysteresis loss properties of the anti-vibration rubber.

### CITATION LIST

### Patent Literature

PTL 1: JP 09-176387 Laid-Open
EP 2 993 059 A1 and EP 2 993 060 A1 describe pneumatic tires comprising a tread formed from a rubber composition containing, in specified amounts, a rubber component, a solventless acrylic resin, and a liquid xylene resin. US 2014/0339037 A1 relates to a vibration-damping sheet including a vibration-damping layer containing 100 parts by mass of rubber and 30 parts by mass or more of carbon black having a specified iodine adsorption number. EP 2 918 651 A1 discloses a vibration damping material containing, in specified amounts in an acrylic rubber, an organic peroxide, and two kinds of carbon black having different mean particle diameters. JP H01 203456 A refers to a panel vibration damper obtained by blending a curing agent and inorganic filler with a resin component comprising, in specified amounts, an epoxy resin, a xylene resin, a modified xylene resin, and a thermoplastic elastomer. JP 2010 260933 A is directed to a rubber composition for a seismic isolation structure. JP 2010 255666 A relates to a seismic isolation structure obtained by using a specific rubber composition. JP 2016 138179 A describes a rubber composition for vibration-proof rubber, said rubber composition containing a rubber component, a sulfur-based vulcanizer, a mixed resin, and bismaleimide, wherein the mixed resin contains an aromatic hydrocarbon resin and an aliphatic hydrocarbon resin.

### SUMMARY

As described above, the technique of PTL 1 made it possible to realize a certain level of high loss properties of an anti-vibration rubber. However, considering the recent increasingly strict requirements for reducing noises and vibrations, an anti-vibration rubber having yet higher hysteresis loss needs to be developed in terms of further improving vibration damping performance thereof.

In view of this, an object of the present disclosure is to provide a rubber composition for anti-vibration rubbers which is excellent in high hysteresis loss properties thereof and an anti-vibration rubber for vehicles which is excellent in vibration damping performance thereof.

The inventors of the present disclosure discovered, as a result of a keen study to achieve the aforementioned object, that it is possible to realize a rubber composition for anti-vibration rubbers having very high hysteresis loss that has never been achieved by the conventional rubber composition for anti-vibration rubbers, by composing a rubber component of the rubber composition mainly out of diene-based rubber and including carbon black and a specific type of resin by a specific content in the rubber composition.

Specifically, according to claim 1 a rubber composition for anti-vibration rubbers of the present disclosure has: a rubber component containing a diene-based rubber; 40 to 120 parts by mass of carbon black with respect to 100 parts by mass of the rubber component; and 20 to 80 parts by mass of a resin with respect to 100 parts by mass of the rubber component, wherein the resin contains 10 parts by mass or more of a xylene resin with respect to 100 parts by mass of the rubber component.
Excellently high hysteresis loss of the rubber composition can be achieved by the aforementioned compositional characteristics.

In the rubber composition for anti-vibration rubbers of the present disclosure, it is preferable that the carbon black has a nitrogen adsorption specific surface area (N₂SA) of ≥ 30 m²/g. The high hysteresis loss properties of the rubber composition can be further improved in this case.

In the rubber composition for anti-vibration rubbers of the present disclosure, it is preferable that a content of the carbon black is in the range of 60 to 120 parts by mass with respect to 100 parts by mass of the rubber component. The high hysteresis loss properties of the rubber composition can be further improved in this case.

In the rubber composition for anti-vibration rubbers of the present disclosure, it is preferable that the carbon black is ISAF or SAF. The high hysteresis loss properties of the rubber composition can be further improved in this case.

In the rubber composition for anti-vibration rubbers of the present disclosure, it is preferable that the resin includes 20 parts by mass or more of a xylene resin with respect to 100 parts by mass of the rubber component. The high hysteresis loss properties of the rubber composition can be further improved in this case.

In the rubber composition for anti-vibration rubbers of the present disclosure, it is preferable that a content of the resin is in the range of 40 to 80 parts by mass with respect to 100 parts by mass of the rubber component. The high hysteresis loss properties of the rubber composition can be further improved in this case.

An anti-vibration rubber for vehicles of the present disclosure is characterized in that it uses a crosslinked rubber composition for anti-vibration rubbers, obtained by subjecting the rubber composition for anti-vibration rubbers of the present disclosure to crosslinking.
Excellent vibration damping performance can be realized by the aforementioned structural feature.

According to the present disclosure, it is possible to provide i) a rubber composition for anti-vibration rubbers which is excellent in high hysteresis loss properties thereof and ii) an anti-vibration rubber for vehicles which exhibits excellent vibration damping performance without sacrificing good controllability and stability of a vehicle in which the anti-vibration rubber is mounted.

### DETAILED DESCRIPTION

### < Rubber composition for anti-vibration rubbers >

Hereinafter, an embodiment of a rubber composition for anti-vibration rubbers of the present disclosure will be described in detail.
The rubber composition for anti-vibration rubbers of the present disclosure according to claim 1 contains: a rubber component including a diene-based rubber therein; 40 to 120 parts by mass of carbon black with respect to 100 parts by mass of the rubber component; and 20 to 80 parts by mass of a resin with respect to 100 parts by mass of the rubber component, wherein the resin characteristically includes therein ≥ 10 parts by mass of a xylene resin with respect to 100 parts by mass of the rubber component.

The rubber composition for anti-vibration rubbers of the present disclosure has realized high hysteresis loss that the conventional anti-vibration rubbers failed to achieve, by i) composing a rubber component thereof primarily out of diene-based rubber, ii) including high-grade carbon black in the rubber composition, and iii) including a resin by a larger content than usual in the rubber composition, which resin contains a xylene resin therein by a certain content or more (≥ 10 parts by mass with respect to 100 parts by mass of the rubber component).
The majority of the conventional rubber compositions for anti-vibration rubbers, in contrast, attempted to achieve high hysteresis loss by adjusting types of rubber components and carbon blacks thereof.

### (Rubber component)

The rubber component, contained in the rubber composition for anti-vibration rubbers of the present disclosure, includes a diene-based rubber therein.

The rubber component may either be 100 % composed of the diene-based rubber(s) or include a rubber other than a diene-based rubber unless the inclusion thereof adversely affects the object of the present disclosure.

A content of the diene-based rubber in the rubber component is preferably ≥ 50 mass %, more preferably ≥ 80 mass %, and most preferably 100 mass %.

Type of the diene-based rubber is appropriately selected in accordance with the performances required of the rubber composition for anti-vibration rubbers and includes natural rubber (NR), isoprene rubber (IR), ethylene-propylene-diene rubber (EPDM), chloroprene rubber (CR), and butyl rubber (IIR).

It is preferable that the diene-based rubber includes at least one selected from the group consisting of natural rubber, and butyl rubber.

### (Resin)

The rubber composition for anti-vibration rubbers of the present disclosure contains, in addition to the rubber component described above, a resin including therein a xylene resin.

It is possible to realize very good "high hysteresis loss" properties of the rubber composition for anti-vibration rubbers by including therein, by an appropriate content, a resin containing a xylene resin.

A "resin" represents a conventional resin, which excludes rubbers in general including the aforementioned rubber component, in the present disclosure.

A content of the resin is to be in the range of 20 to 80 parts by mass with respect to 100 parts by mass of the rubber component in terms of realizing satisfactorily good high hysteresis loss properties. When the content of the resin is less than 20 parts by mass with respect to 100 parts by mass of the rubber component, satisfactorily good high hysteresis loss properties of the rubber composition may not be obtained. When the content of the resin exceeds 80 parts by mass with respect to 100 parts by mass of the rubber component, workability in manufacturing the rubber composition may deteriorate. The content of the resin is preferably in the range of 40 to 80 parts by mass with respect to 100 parts by mass of the rubber component in terms of realizing yet better high hysteresis loss properties of the rubber composition.

Regarding the resin, inclusion of a xylene resin therein suffices and type(s) of resin(s) other than the xylene resin include phenol resin, rosin resin, dicyclopentadiene (DCPD) resin, dicyclopentadiene-isoprene copolymer, C5-based petroleum resin, C9-based petroleum resin, alicyclic petroleum resin, petroleum resin obtained by copolymerizing a C5 fraction and a C9 fraction (C5-C9-based petroleum resin), terpene resin, ketone resin, and modified resins of the aforementioned resins. These examples of the resin may be used by either a single type or two or more types in combination.

A content of the xylene resin in the resin is to be ≥ 10 parts by mass with respect to 100 parts by mass of the rubber component. When the content of the xylene resin in the resin is less than 10 parts by mass with respect to 100 parts by mass of the rubber component, satisfactorily good high hysteresis loss properties of the rubber composition may not be obtained. The content of the xylene resin in the resin is preferably ≥ 20 parts by mass with respect to 100 parts by mass of the rubber component in terms of realizing yet better high hysteresis loss properties of the rubber composition.

### (Carbon black)

The rubber composition for anti-vibration rubbers of the present disclosure contains carbon black in addition to the rubber component and the resin described above.

It is possible to maintain physical properties such as strength of the rubber composition for anti-vibration rubbers in a satisfactory manner by including carbon black, by an appropriate content, in the rubber composition.

A content of the carbon black is to be in the range of 40 to 120 parts by mass and preferably in the range of 60 to 120 parts by mass with respect to 100 parts by mass of the rubber component. It is possible to realize in this case good high hysteresis loss properties of the rubber composition, while maintaining other physical properties such as strength of the rubber composition in a satisfactory manner, even when hysteresis loss of the rubber composition is increased by addition of the resin as described above. The content of carbon black, which is less than 40 parts by mass with respect to 100 parts by mass of the rubber component, may not realize satisfactorily high strength and satisfactorily good high hysteresis loss properties of the rubber composition. The content of carbon black, which exceeds 120 parts by mass with respect to 100 parts by mass of the rubber component, may increase viscosity of rubber in an unvulcanized state too much and deteriorate workability in manufacturing the rubber composition.

The carbon black preferably has a nitrogen adsorption specific surface area (N₂SA) of ≥ 30 m²/g. It is possible to realize in this case yet better high hysteresis loss properties of the rubber composition than otherwise, while maintaining other physical properties such as strength of the rubber composition in a satisfactory manner, even when hysteresis loss of the rubber composition is increased by addition of the resin as described above. From the same point of view, N₂SA of the carbon black is more preferably ≥ 40 m²/g, further more preferably ≥ 70 m²/g, and particularly preferably ≥ 100 m²/g. The upper limit of N₂SA of the carbon black is not particularly restricted but N₂SA of the carbon black is preferably ≤ 130 m²/g in terms of avoiding deterioration of other physical properties of the rubber composition.
N₂SA of the carbon black can be measured by the single-point measuring procedures according to ISO 4652-1. For example, a specific surface area (m²/g) of carbon black can be determined by: immersing a degassed carbon black sample into liquid nitrogen; measuring an amount of nitrogen adsorbed at surfaces of the carbon black sample in an equilibrium state; and calculating a specific surface area (m²/g) of the carbon black sample from the amount of adsorbed nitrogen (and the weight of the sample) thus measured.

The carbon black preferably has a grade higher than FEF, so that it is possible to realize yet better high hysteresis loss properties of the rubber composition than otherwise, while maintaining other physical properties such as strength of the rubber composition in a satisfactory manner, even when hysteresis loss of the rubber composition is increased by addition of the resin as described above. The grade of the carbon black, which is preferably higher than FEF as described above, is more preferably ISAF or SAF, so that strength and the high hysteresis loss properties of the rubber composition can be further improved.

### (Other components)

The rubber composition for anti-vibration rubbers of the present disclosure may contain, in addition to the rubber component, the resin and the carbon black described above, additives such as a filler other than carbon black, a crosslinking agent, a crosslinking accelerator, a crosslinking accelerator auxiliary, an anti-aging agent, an antioxidant, a foaming agent, a plasticizer, a lubricant, a tackifier, an ultraviolet absorbing agent, and the like unless addition thereof adversely affects the object of the present disclosure. Contents of the other components described above are not particularly restricted.

Type of the filler is not particularly restricted and fillers such as silica, white carbon, particulate magnesium silicate, heavy calcium carbonate, magnesium carbonate, clay, talc, and the like can be appropriately used.

Type of the crosslinking agent is not particularly restricted and examples thereof include sulfur.
Inclusion of a crosslinking agent by an appropriate content in the rubber composition for anti-vibration rubbers allows a crosslinking reaction to occur in the rubber composition. A content of the crosslinking agent is preferably in the range of 0.4 to 5 parts by mass and more preferably in the range of 0.6 to 3 parts by mass with respect to 100 parts by mass of the rubber component.

Type of the crosslinking accelerator is not particularly restricted and the conventionally known crosslinking accelerator can be used. Examples of the crosslinking accelerator include: thiazole-based vulcanization accelerator such as 2-mercaptobenzothiazole, dibenzothiazyl disulfide; sulfenamide-based vulcanization accelerator such as N-cyclohexyl-2-benzothiazyl sulfenamide, N-t-butyl-2-benzothiazyl sulfenamide; guanidine-based vulcanization accelerator such as diphenylguanidine; thiuram-based vulcanization accelerator such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, dipentamethylenethiuram tetrasulfide; dithiocarbamate salt-based vulcanization accelerator such as zinc dimethyldithiocarbamate; zinc dialkyldithiophosphate; and the like.

Either a single type or two or more types in combination selected from the sulfenamide-based vulcanization accelerator, the thiuram-based vulcanization accelerator, the thiazole-based vulcanization accelerator, the guanidine-based vulcanization accelerator and the dithiocarbamate salt-based vulcanization accelerator can be used as the crosslinking accelerator. Combining the thiuram-based vulcanization accelerator and/or the thiazole-based vulcanization accelerator, which exhibits relatively high crosslinking acceleration ability, with the guanidine-based vulcanization accelerator and/or the sulfenamide-based vulcanization accelerator, which exhibits moderate or relatively low crosslinking acceleration ability, is suitable as an application in terms of adjusting the crosslinking behavior (rate). Specific examples of the combination include a combination of tetramethylthiuram disulfide and N-cyclohexyl-2-benzothiazyl sulfenamide, a combination of tetrabutylthiuram disulfide and N-t-butyl-2-benzothiazyl sulfenamide, a combination of dibenzothiazyl disulfide and diphenylguanidine, and the like.

Examples of the crosslinking accelerator auxiliary include zinc white (ZnO), fatty acid, and the like. The fatty acid may be any of saturated, unsaturated, normal, and branched fatty acids. The number of carbon atoms of the fatty acid, which is not particularly restricted, either, may be in the range of 1 to 30, preferably in the range of 15 to 30. Specific examples of the fatty acid include: naphthenic acid such as cyclohexanoic acid (cyclohexanecarboxylic acid), alkylcyclopentane having a side chain; saturated fatty acid such as hexanoic acid, octanoic acid, decanoic aid (including a branched carboxylic acid such as neodecanoic acid), dodecanoic acid, tetradecanoic acid, hexadecanoic acid, octadecanoic acid (stearic acid); unsaturated fatty acid such as methacrylic acid, oleic acid, linoleic acid, linolenic acid; resin acid such as rosin, tall-oil acid, abietic acid; and the like. These examples of the crosslinking accelerator auxiliary may be used by either a single type or two or more types in combination. Zinc white and stearic acid can be preferably used in the present disclosure.

Type of the antioxidant/the anti-aging agent is not particularly restricted and those conventionally known can be used. Examples of the antioxidant include: a phenol-based antioxidant, an imidazole-based antioxidant, an amine-based antioxidant, and the like. These examples of the antioxidant may be used by either a single type or two or more types in combination.

A method for blending the respective components described above in obtaining the rubber composition for anti-vibration rubbers of the present disclosure is not particularly restricted. Either raw materials of all components may be mixed and kneaded together at a time or the respective components may be blended, i.e. mixed and kneaded, in stages, for example, over two or three stages. Conventionally known mixing and kneading devices such as rolls, an internal mixer, a Banbury rotor or the like can be used in the mixing and kneading process. In a case where the rubber composition is to be formed into a sheet-like or a belt-like configuration, conventionally known molding devices such as an extrusion molding machine, a press machine or the like can be used.

### < Anti-vibration rubber for vehicles >

An anti-vibration rubber for vehicles of the present disclosure is characterized in that it uses a crosslinked rubber composition for anti-vibration rubbers, which is obtained by subjecting the aforementioned rubber composition for anti-vibration rubbers of the present disclosure to crosslinking.

It is possible to realize excellent vibration damping performance without sacrificing good controllability and stability of a vehicle in which an anti-vibration rubber is mounted, by using for the anti-vibration rubber a crosslinked rubber composition for anti-vibration rubbers, which is obtained by subjecting the rubber composition for anti-vibration rubbers of the present disclosure to crosslinking.

With regard to hysteresis loss of the crosslinked rubber composition for anti-vibration rubbers, tanδ at 15 Hz of the crosslinked rubber composition is preferably ≥ 0.5 and more preferably ≥ 0.6 at the room temperature (23 ± 2 °C). The vibration damping performance can be further improved in this case.

Crosslinking (vulcanization) conditions under which the rubber composition for anti-vibration rubbers is cured are not particularly restricted. For example, a vulcanization process in which vulcanization is carried out at 140 to 180 °C for 5 to 120 minutes can be employed.

In the present disclosure, an anti-vibration rubber for vehicles represents a crosslinked rubber product used for preventing/alleviating propagation of vibrations in a vehicle (an automobile/a passenger car, a truck, a bus, trains, a construction machine like an excavator) by utilizing internal friction of the product. Specifically, an anti-vibration rubber for vehicles represents a product used in such a vehicle as described above for the aforementioned purpose in a state where the crosslinked rubber composition for anti-vibration rubbers is in contact/integral with a rigid body made of resin, metal or the like. Examples of a method for making the crosslinked rubber composition for anti-vibration rubbers integral with a rigid body include a non-adhesion type method such as injecting the rubber into a rigid body, a method of attaching the rubber to a rigid body by way of an adhesive, and the like. It is acceptable in this regard to use as the rubber a fluid-sealed-in type anti-vibration rubber in which a fluid is sealed to obtain a vibration propagation preventing effect by the fluid, as well.

The anti-vibration rubber for vehicles of the present disclosure is preferably an anti-vibration rubber for automobiles and more preferably an anti-vibration rubber used for a chassis component, an engine mount member, and the like in an automobile. It is possible to realize excellent vibration damping performance, by the satisfactory high hysteresis loss properties obtained by the crosslinked rubber composition for anti-vibration rubbers, in this case.

### EXAMPLES

The present disclosure will be described further in detail by Examples hereinafter. The present disclosure is not limited by any means by these Examples.

### (Reference Examples 1 to 12, Comparative Examples 1 to 2)

Respective samples of a rubber composition for anti-vibration rubbers are/were prepared according to the component compositions/formulations shown in Table 1.

Then, respective samples of a crosslinked rubber composition for anti-vibration rubbers are/were prepared by subjecting the respective samples of the rubber composition for anti-vibration rubbers thus prepared to a vulcanization treatment involving heating at 155 °C for 12 to 26 minutes.

### (Evaluation)

The following evaluations (1) to (3) are/were made for each of the samples of the crosslinked rubber composition for anti-vibration rubbers.

### (1) Hardness (Hd)

Hardness is/was measured for each of the samples of the crosslinked rubber composition for anti-vibration rubbers according to JIS K 6253 (Type A). Measurement results are shown in Table 1.

With regard to the hardness thus measured, the larger value represents the higher hardness.

### (2) Elongation at break (Eb)

Elongation at break (%) is/was measured for each of the samples of the crosslinked (vulcanized) rubber composition for anti-vibration rubbers according to JIS K 6251 at 23 °C. Measurement results are shown in Table 1.

With regard to the elongation at break thus measured, the larger value represents the larger elongation at break.

### (3) Hysteresis loss properties (tanδ)

Hysteresis loss or tanδ is/was measured for each of the samples of the crosslinked rubber composition for anti-vibration rubbers according to JIS K 6394: 2007 under the conditions of 15 Hz (and 100 Hz) at 23 °C ± 2 °C. Measurement results are shown in Table 1.

With regard to the tanδ thus measured, the larger value represents the higher hysteresis loss.

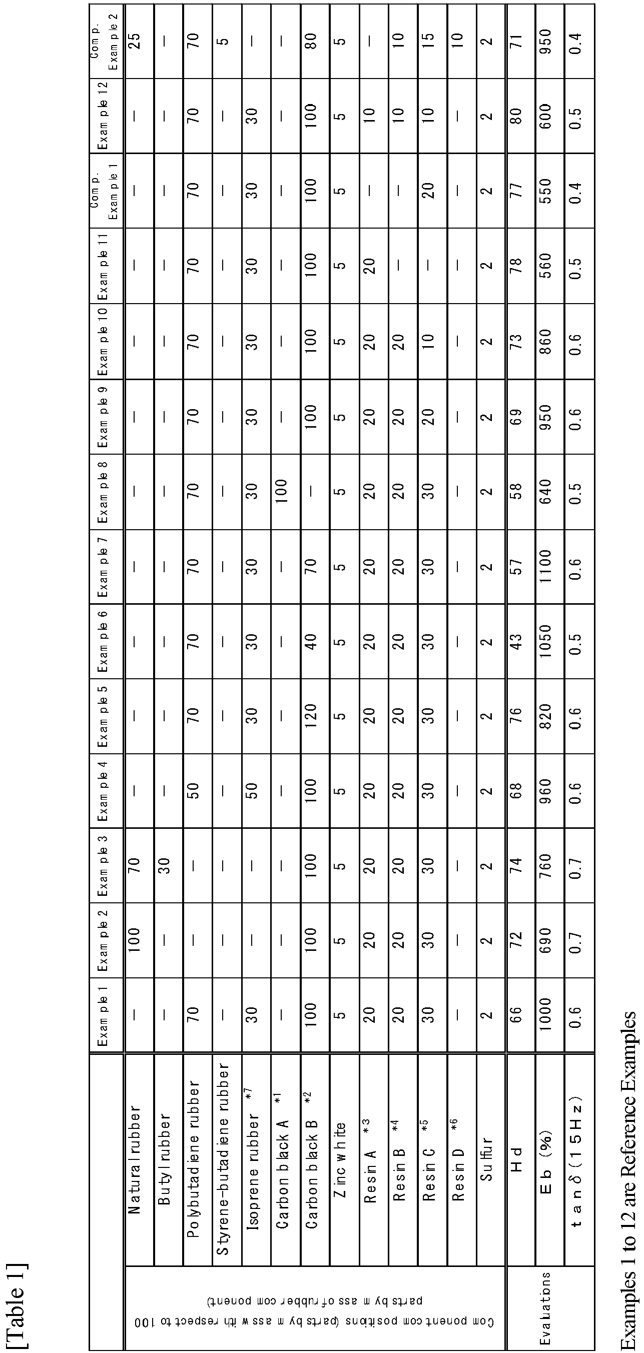

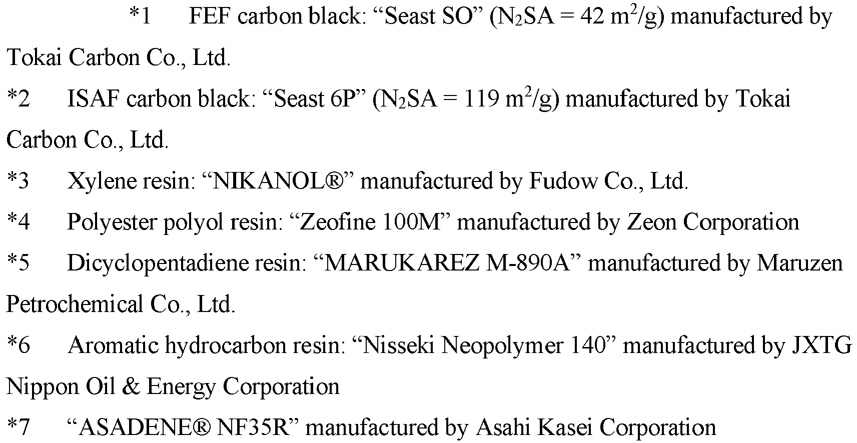

It is understood from the results shown in Table 1 that the respective samples of the Reference Examples unanimously exhibit better high hysteresis loss properties than the respective samples of Comparative Examples.

### INDUSTRIAL APPLICABILITY

According to the present disclosure, it is possible to provide a rubber composition for anti-vibration rubbers which is excellent in high hysteresis loss properties thereof and an anti-vibration rubber for vehicles which is excellent in vibration damping performance thereof.

## Claims

1. A rubber composition for anti-vibration rubbers, wherein it comprises:
a rubber component containing a diene-based rubber;
40 to 120 parts by mass of carbon black with respect to 100 parts by mass of the rubber component; and
20 to 80 parts by mass of a resin with respect to 100 parts by mass of the rubber component,
wherein the resin contains 10 parts by mass or more of a xylene resin with respect to 100 parts by mass of the rubber component,
the diene-based rubber is at least one selected from the group consisting exclusively of natural rubber, isoprene rubber, ethylene-propylene-diene rubber, chloroprene rubber, and butyl rubber, and
the resin other than the xylene resin is at least one selected from the group consisting exclusively of phenol resin, rosin resin, dicyclopentadiene (DCPD) resin, dicyclopentadiene-isoprene copolymer, C5-based petroleum resin, C9-based petroleum resin, alicyclic petroleum resin, petroleum resin obtained by copolymerizing a C5 fraction and a C9 fraction (C5-C9-based petroleum resin), terpene resin, ketone resin, and modified resins of the aforementioned resins.

2. The rubber composition for anti-vibration rubbers of claim 1, wherein the carbon black has a nitrogen adsorption specific surface area (N₂SA) of ≥ 30 m²/g.

3. The rubber composition for anti-vibration rubbers of claim 1 or 2, wherein a content of the carbon black is in the range of 60 to 120 parts by mass with respect to 100 parts by mass of the rubber component.

4. The rubber composition for anti-vibration rubbers of any of claims 1 to 3, wherein the carbon black is ISAF or SAF.

5. The rubber composition for anti-vibration rubbers of any of claims 1 to 4, wherein the resin includes 20 parts by mass or more of a xylene resin with respect to 100 parts by mass of the rubber component.

6. The rubber composition for anti-vibration rubbers of any of claims 1 to 5, wherein a content of the resin is in the range of 40 to 80 parts by mass with respect to 100 parts by mass of the rubber component.

7. An anti-vibration rubber for vehicles, wherein it uses a crosslinked rubber composition for anti-vibration rubbers, obtained by subjecting the rubber composition for anti-vibration rubbers of any of claims 1 to 6 to crosslinking.

8. The rubber composition for anti-vibration rubbers of claim 1, wherein the diene-based rubber is at least one selected from the group consisting of natural rubber and butyl rubber.

9. A crosslinked rubber composition for anti-vibration rubbers, obtained by subjecting the rubber composition for anti-vibration rubbers of claim 1 to crosslinking,
wherein hysteresis loss or tan6 at 15 Hz of the crosslinked rubber composition is ≥ 0.6 at room temperature (23 ± 2 °C).

## Patentansprüche

1. Kautschukzusammensetzung für schwingungsdämpfende Kautschuke, wobei diese umfasst:
eine Kautschukkomponente, die einen Kautschuk auf Dienbasis enthält;
40 bis 120 Masseteile Industrieruß, bezogen auf 100 Masseteile der Kautschukkomponente; und
20 bis 80 Masseteile eines Harzes, bezogen auf 100 Masseteile der Kautschukkomponente,
wobei das Harz 10 Masseteile oder mehr eines Xylenharzes, bezogen auf 100 Masseteile der Kautschukkomponente, enthält,
der Kautschuk auf Dienbasis mindestens einer ist, der aus der Gruppe ausgewählt wird, die ausschließlich aus Folgendem besteht: Naturkautschuk, Isoprenkautschuk, Ethylen-Propylen-Dien-Kautschuk, Chloroprenkautschuk und Butylkautschuk, und
das von dem Xylenharz verschiedene Harz mindestens eines ist, das aus der Gruppe ausgewählt wird, die ausschließlich aus Folgendem besteht: Phenolharz, Kolophoniumharz, Dicyclopentadien-(DCPD-)Harz, Dicyclopentadien-Isopren-Copolymer, C5-basiertes Erdölharz, C9-basiertes Erdölharz, alicyclisches Erdölharz, durch Copolymerisation einer C5-Fraktion und einer C9-Fraktion gewonnenes Erdölharz (C5-C9-basiertes Erdölharz), Terpenharz, Ketonharz und modifizierte Harze der vorgenannten Harze.

2. Kautschukzusammensetzung für schwingungsdämpfende Kautschuke nach Anspruch 1, wobei der Industrieruß eine spezifische Adsorptionsoberfläche für Stickstoff (N₂SA) von ≥ 30 m²/g aufweist.

3. Kautschukzusammensetzung für schwingungsdämpfende Kautschuke nach Anspruch 1 oder 2, wobei ein Anteil des Industrierußes im Bereich von 60 bis 120 Masseteilen liegt, bezogen auf 100 Masseteile der Kautschukkomponente.

4. Kautschukzusammensetzung für schwingungsdämpfende Kautschuke nach einem der Ansprüche 1 bis 3, wobei der Industrieruß ISAF oder SAF ist.

5. Kautschukzusammensetzung für schwingungsdämpfende Kautschuke nach einem der Ansprüche 1 bis 4, wobei das Harz 20 Masseteile oder mehr eines Xylenharzes einschließt, bezogen auf 100 Masseteile der Kautschukkomponente.

6. Kautschukzusammensetzung für schwingungsdämpfende Kautschuke nach einem der Ansprüche 1 bis 5, wobei ein Anteil des Harzes im Bereich von 40 bis 80 Masseteilen liegt, bezogen auf 100 Masseteile der Kautschukkomponente.

7. Schwingungsdämpfender Kautschuk für Fahrzeuge, wobei dieser eine vernetzte Kautschukzusammensetzung für schwingungsdämpfende Kautschuke verwendet, die dadurch erlangt wird, dass die Kautschukzusammensetzung für schwingungsdämpfende Kautschuke nach einem der Ansprüche 1 bis 6 einer Vernetzung unterzogen wird.

8. Kautschukzusammensetzung für schwingungsdämpfende Kautschuke nach Anspruch 1, wobei der Kautschuk auf Dienbasis mindestens einer ist, der aus der Gruppe ausgewählt wird, die aus Naturkautschuk und Butylkautschuk besteht.

9. Vernetzte Kautschukzusammensetzung für schwingungsdämpfende Kautschuke, die dadurch erlangt wird, dass die Kautschukzusammensetzung für schwingungsdämpfende Kautschuke nach Anspruch 1 einer Vernetzung unterzogen wird,
wobei der Hystereseverlust oder tanδ bei 15 Hz der vernetzten Kautschukzusammensetzung ≥ 0,6 bei Raumtemperatur (23 ± 2 °C) ist.

## Revendications

1. Composition de caoutchouc pour caoutchoucs anti-vibration, dans laquelle elle comprend :
un composant de caoutchouc contenant un caoutchouc à base de diène ;
40 à 120 parties en masse de noir de carbone par rapport à 100 parties en masse du composant de caoutchouc ; et
20 à 80 parties en masse d'une résine par rapport à 100 parties en masse du composant de caoutchouc,
dans laquelle la résine contient 10 parties en masse ou plus d'une résine de xylène par rapport à 100 parties en masse du composant de caoutchouc,
le caoutchouc à base de diène est au moins un élément sélectionné dans le groupe constitué exclusivement de caoutchouc naturel, de caoutchouc d'isoprène, de caoutchouc d'éthylène-propylène-diène, de caoutchouc de chloroprène et de caoutchouc de butyle, et
la résine autre que la résine de xylène est au moins une résine sélectionnée dans le groupe constitué exclusivement de résine de phénol, de résine de colophane, de résine de dicyclopentadiène (DCPD), d'un copolymère dicyclopentadiène-isoprène, de résine de pétrole à base de C5, de résine de pétrole à base de C9, de résine de pétrole alicyclique, de résine de pétrole obtenue par copolymérisation d'une fraction C5 et d'une fraction C9 (résine de pétrole à base de C5-C9), de résine de terpène, de résine de cétone, et de résines modifiées des résines mentionnées ci-dessus.

2. Composition de caoutchouc pour caoutchoucs anti-vibration selon la revendication 1, dans laquelle le noir de carbone présente une surface spécifique d'adsorption d'azote (N₂SA) ≥ 30 m²/g.

3. Composition de caoutchouc pour caoutchoucs anti-vibration selon la revendication 1 ou 2, dans laquelle une teneur du noir de carbone est comprise dans la plage allant de 60 à 120 parties en masse par rapport à 100 parties en masse du composant de caoutchouc.

4. Composition de caoutchouc pour caoutchoucs anti-vibration selon l'une quelconque des revendications 1 à 3, dans laquelle le noir de carbone est ISAF ou SAF.

5. Composition de caoutchouc pour caoutchoucs anti-vibration selon l'une quelconque des revendications 1 à 4, dans laquelle la résine inclut 20 parties en masse ou plus d'une résine de xylène par rapport à 100 parties en masse du composant de caoutchouc.

6. Composition de caoutchouc pour caoutchoucs anti-vibration selon l'une quelconque des revendications 1 à 5, dans laquelle une teneur de la résine est dans la plage de 40 à 80 parties en masse par rapport à 100 parties en masse du composant de caoutchouc.

7. Caoutchouc anti-vibration pour véhicules dans lequel il utilise une composition de caoutchouc réticulée pour caoutchoucs anti-vibration, obtenue en soumettant la composition de caoutchouc pour caoutchoucs anti-vibration selon l'une quelconque des revendications 1 à 6 à une réticulation.

8. Composition de caoutchouc pour caoutchoucs anti-vibration selon la revendication 1, dans laquelle le caoutchouc à base de diène est au moins un élément sélectionné dans le groupe constitué de caoutchouc naturel et de caoutchouc de butyle.

9. Composition de caoutchouc réticulée pour caoutchoucs anti-vibration, obtenue en soumettant la composition de caoutchouc pour caoutchoucs anti-vibration selon la revendication 1 à une réticulation,
dans laquelle la perte d'hystérésis ou tanδ à 15 Hz de la composition de caoutchouc réticulée est ≥ 0,6 à la température ambiante (23 ± 2 °C).
